(19)

Europäisches Patentamt
European Patent Office
Office européen des brevets

(11) **EP 3 537 563 A1**

(12) **DEMANDE DE BREVET EUROPEEN**

(43) Date de publication:
**11.09.2019 Bulletin 2019/37**

(21) Numéro de dépôt: **19156810.4**

(22) Date de dépôt: **13.02.2019**

(51) Int Cl.:
*H02J 7/00* (2006.01)       *B60R 16/03* (2006.01)
*F02B 37/10* (2006.01)      *F02B 39/10* (2006.01)
*H02J 7/14* (2006.01)       *H02J 7/34* (2006.01)
*F02B 37/04* (2006.01)      *B60L 58/13* (2019.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **08.03.2018 FR 1852001**

(71) Demandeur: **PSA Automobiles SA
78300 Poissy (FR)**

(72) Inventeurs:
• **BOTCHON, YANNICK
92160 ANTONY (FR)**
• **DU VERGER, STEPHANE
95470 ST WITZ (FR)**

(54) **PROCEDE DE PILOTAGE PREDICTIF D'UNE RECHARGE D'UN STOCKEUR D'ENERGIE POUR L'ALIMENTATION D'UN COMPRESSEUR ELECTRIQUE**

(57)    L'invention porte principalement sur un procédé de pilotage prédictif d'une recharge d'un stockeur d'énergie auxiliaire (36) pour l'alimentation d'un compresseur électrique (14) de moteur thermique (12), notamment de véhicule automobile, ledit stockeur d'énergie auxiliaire (36) étant associé à un stockeur d'énergie principal (32), caractérisé en ce que ledit procédé comporte:
- une étape de détermination d'une durée d'activation et d'un courant consommé par le compresseur électrique (14) lors d'une activation future dudit compresseur électrique (14),
- une étape de détermination d'un niveau de charge minimal du stockeur d'énergie auxiliaire (36) permettant l'activation future du compresseur électrique (14) à partir de la durée d'activation et du courant consommé précédemment déterminés, et
- une étape de pilotage de la recharge du stockeur d'énergie auxiliaire (36) en fonction d'un niveau de charge actuel du stockeur d'énergie auxiliaire (36) et du niveau de charge minimal du stockeur d'énergie auxiliaire (36) précédemment déterminé.

**Fig. 1**

EP 3 537 563 A1

**Description**

La présente invention porte sur un procédé de pilotage prédictif d'une recharge d'un stockeur d'énergie pour l'alimentation d'un compresseur électrique de moteur thermique. L'invention trouve une application particulièrement avantageuse, mais non exclusive, dans le domaine des véhicules automobiles.

Il est connu d'équiper un moteur d'un système de suralimentation, tel qu'un turbocompresseur, afin de rehausser les performances du moteur par rapport à sa cylindrée. En effet, en respect des nouvelles normes anti-pollution, la tendance des constructeurs automobiles est de réduire la cylindrée d'un moteur thermique pour le même type de véhicule afin de contribuer à la réduction des polluants émis par le véhicule, d'obtenir un gain en consommation de carburant, et de réduire le volume d'encombrement et la masse dudit moteur.

Pour compenser cette perte de cylindrée, le moteur est avantageusement équipé d'un système de suralimentation avec au moins un turbocompresseur utilisant l'énergie contenue dans les gaz d'échappement pour entraîner un compresseur, ce dernier fournissant de l'air à une pression élevée à l'admission du moteur afin d'optimiser le remplissage des cylindres.

Les moteurs suralimentés à l'aide d'un tel dispositif ont l'inconvénient de présenter un temps de réponse important dans les phases où il existe un besoin de puissance alors que le turbocompresseur ne dispose pas de suffisamment d'énergie fournie par l'échappement. Une solution connue pour répondre à ce problème consiste à assister le turbocompresseur par un compresseur électrique. Une fois que le turbocompresseur a été activé, l'assistance du compresseur électrique peut être arrêtée, en sorte que le compresseur électrique ne fonctionne pas en permanence. Le compresseur électrique peut également assister le turbocompresseur lors de phases d'accélérations.

Toutefois, l'utilisation d'un compresseur électrique entraîne de fortes sollicitations énergétiques répétées pendant des durées plus ou moins importantes susceptibles d'avoir un impact négatif sur l'alimentation des différents organes du véhicule automobile. En outre, l'énergie requise pour l'activation du compresseur électrique n'est pas toujours disponible.

L'invention vise à remédier efficacement à ces inconvénients en proposant un procédé de pilotage prédictif d'une recharge d'un stockeur d'énergie auxiliaire pour l'alimentation d'un compresseur électrique de moteur thermique, notamment de véhicule automobile, le stockeur d'énergie auxiliaire étant associé à un stockeur d'énergie principal, caractérisé en ce que le procédé comporte:

- une étape de détermination d'une durée d'activation et d'un courant consommé par le compresseur électrique lors d'une activation future du compresseur électrique,
- une étape de détermination d'un niveau de charge minimal du stockeur d'énergie auxiliaire permettant l'activation future du compresseur électrique à partir de la durée d'activation et du courant consommé précédemment déterminés, et
- une étape de pilotage de la recharge du stockeur d'énergie auxiliaire en fonction d'un niveau de charge actuel du stockeur d'énergie auxiliaire et du niveau de charge minimal du stockeur d'énergie auxiliaire précédemment déterminé.

L'invention permet ainsi, en pilotant de façon préventive la recharge du stockeur d'énergie auxiliaire, d'assurer la fourniture d'énergie pendant la durée d'activation du compresseur électrique, lorsque cela sera nécessaire, et ce même en cas d'incapacité des moyens conventionnels de fourniture d'énergie électrique du véhicule, tels que l'alternateur et le stockeur d'énergie principal, à assurer cette tâche. L'invention permet ainsi d'améliorer à moindre coût des performances moteur d'un véhicule à bas régime.

Selon une mise en oeuvre, le procédé comporte l'étape d'autoriser ou d'inhiber la recharge du stockeur d'énergie auxiliaire en fonction d'un niveau de charge du stockeur d'énergie principal.

Selon une mise en oeuvre, la durée d'activation et le courant consommé par le compresseur électrique dépendent d'un mode de fonctionnement du compresseur électrique, d'un état d'activation du compresseur électrique, et de l'autorisation ou non de la recharge du stockeur d'énergie auxiliaire.

Selon une mise en oeuvre, le mode de fonctionnement du compresseur électrique est choisi parmi un mode continu ou un mode transitoire.

Selon une mise en oeuvre, le niveau de charge minimal du stockeur d'énergie auxiliaire permettant l'activation future du compresseur électrique est déterminé à partir de la durée d'activation, du courant consommé, et d'une capacité du stockeur d'énergie auxiliaire.

Selon une mise en oeuvre, une recharge du stockeur d'énergie auxiliaire est sollicitée, dans le cas où la somme du niveau de charge minimal du stockeur d'énergie auxiliaire pour l'activation du compresseur électrique et un niveau de charge minimal du stockeur d'énergie auxiliaire pour des besoins de durabilité du stockeur d'énergie auxiliaire et d'alimentation éventuelle d'autres consommateurs électriques est supérieure au niveau de charge actuel du stockeur d'énergie auxiliaire.

Selon une mise en oeuvre, le niveau de charge minimal du stockeur d'énergie auxiliaire pour des besoins de durabilité du stockeur d'énergie auxiliaire et d'alimentation éventuelle d'autres consommateurs électriques est compris entre 40% et 70% du niveau de charge maximal du stockeur d'énergie auxiliaire.

Selon une mise en oeuvre, le stockeur d'énergie auxiliaire est une batterie, notamment de type Lithium-ion, ou un dispositif capacitif de maintien de tension de réseau de bord.

L'invention a également pour objet un calculateur moteur comportant une mémoire stockant des instructions logicielles pour la mise en oeuvre du procédé de pilotage prédictif d'une recharge d'un stockeur d'énergie auxiliaire pour l'alimentation d'un compresseur électrique de moteur thermique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une architecture de moteur thermique mettant en oeuvre le procédé selon l'invention de pilotage prédictif d'une recharge d'un stockeur d'énergie pour l'alimentation d'un compresseur électrique;

La figure 2 est une représentation schématique des blocs fonctionnels mis en oeuvre pour permettre le pilotage prédictif selon l'invention d'une recharge d'un stockeur d'énergie pour l'alimentation d'un compresseur électrique.

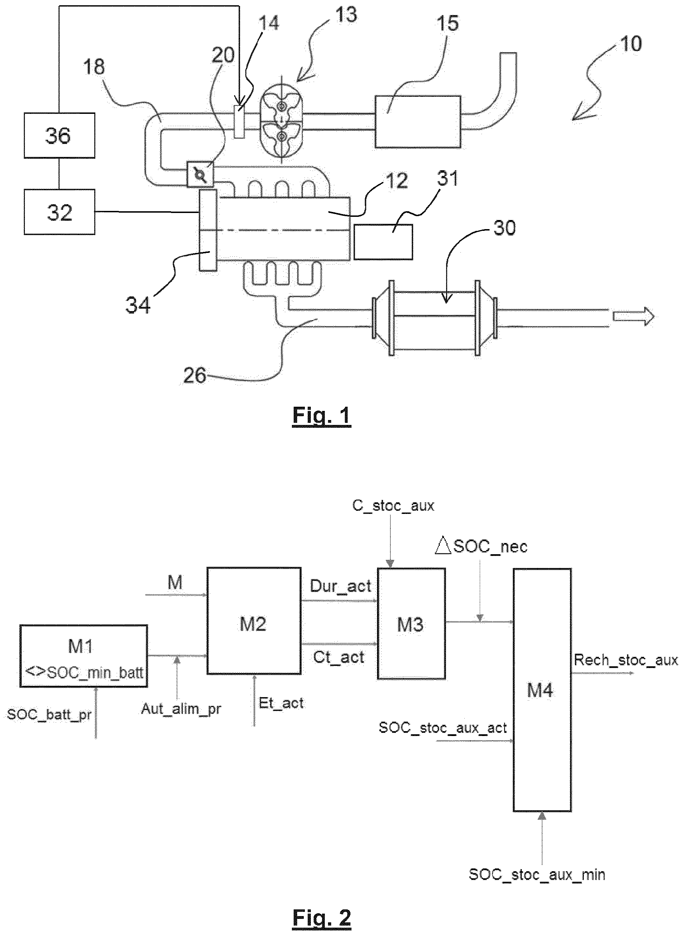

La figure 1 montre une architecture 10 comportant un moteur thermique 12, notamment de véhicule automobile, suralimenté par un turbocompresseur 13 utilisant l'énergie contenue dans les gaz d'échappement pour entraîner un compresseur, ce dernier fournissant de l'air à une pression élevée à l'admission du moteur 12 afin d'optimiser le remplissage des cylindres.

Le turbocompresseur 13 est assisté par un compresseur 14 de type électrique. Le compresseur électrique 14 permet de comprimer l'air d'admission après son filtrage via un filtre à air 15. A cet effet, le compresseur électrique 14 est disposé sur une ligne d'admission 18 en amont d'un doseur d'air 20 permettant de gérer la quantité d'air dans les cylindres du moteur 12.

Par ailleurs, un dispositif de dépollution 30 est disposé sur la ligne d'échappement 26. Le dispositif 30 pourra par exemple contenir un catalyseur trois voies disposé en amont d'un filtre à particules. Le catalyseur trois voies permet notamment de réduire les oxydes d'azote en azote et en dioxyde de carbone, d'oxyder les monoxydes de carbone en dioxyde de carbone, et les hydrocarbures imbrûlés en dioxyde de carbone et en eau.

Le véhicule automobile comporte en outre un stockeur d'énergie principal 32 relié au réseau de bord du véhicule apte à être rechargé par un alternateur 34 entraîné en rotation par le moteur thermique 12 via un dispositif de transmission de mouvement, notamment à courroie, monté en façade accessoires. En outre, un stockeur d'énergie auxiliaire 36 est relié électriquement au stockeur d'énergie principal 32 de manière à pouvoir être rechargé par ce stockeur 32.

Le stockeur d'énergie auxiliaire 36 est destiné à alimenter le compresseur électrique 14. Il pourra prendre la forme d'une batterie, notamment de type Lithium-ion, ou d'un dispositif capacitif de maintien de tension de réseau de bord. Le stockeur d'énergie principal 32 pourra prendre la forme d'une batterie classique, au plomb notamment.

On décrit ci-après, en référence avec la figure 2, le procédé selon l'invention de pilotage prédictif d'une recharge du stockeur d'énergie auxiliaire 36 pour l'alimentation du compresseur électrique 14. Ce procédé est mis en oeuvre par un calculateur moteur 31 comportant une mémoire stockant des instructions logicielles permettant l'implémentation de modules fonctionnels M1, M2, M3, et M4 réalisant les étapes décrites plus en détails ci-après.

Plus précisément, un module fonctionnel M1 permet de déterminer si le stockeur d'énergie principal 32 se trouve dans un éventuel état de charge, qui nécessiterait de prioriser sa propre recharge, notamment par le stockeur d'énergie auxiliaire 36 ou l'alternateur 34, sur l'alimentation du compresseur électrique 14. Le module M1 permet d'autoriser ou d'inhiber la recharge préventive du stockeur d'énergie auxiliaire 36, dans certains cas de vie.

A cet effet, le module fonctionnel M1 compare l'état de charge du stockeur d'énergie principal SOC_batt_pr à un état de charge minimal noté SOC_min_batt compris par exemple entre 30% et 60%. L'autorisation de piloter la recharge du stockeur d'énergie auxiliaire 36, pour garantir la durée d'activation nécessaire au compresseur électrique 14, n'est donnée que si l'état de charge de la batterie principale SOC_batt_pr est supérieur à son niveau de charge minimal SOC_min_batt. Dans ce cas, un signal Aut_alim_pr=1 est envoyé au bloc fonctionnel M2.

Dans le cas contraire (le niveau de charge du stockeur d'énergie principal SOC_batt_pr est inférieur à l'état de charge minimal SOC_min_batt), le procédé n'est pas autorisé à piloter la recharge du stockeur d'énergie auxiliaire 36. Dans ce cas, un signal Aut_alim_pr=0 est envoyé au bloc fonctionnel M2.

Par ailleurs, le module M2 détermine, notamment à partir du mode de fonctionnement M du compresseur électrique 14, de l'état d'activation du compresseur électrique Et_act, et de l'état du stockeur d'énergie principal 32 du véhicule, la durée d'activation Dur_act et un courant électrique Ct_act à considérer pour l'alimentation du compresseur électrique 14.

En l'occurrence, on distingue deux modes de fonctionnement M du compresseur 14, à savoir un mode continu et un mode transitoire d'activation du compresseur électrique 14. Dans le mode continu, on détermine une durée d'activation Dur_act à garantir comprise entre 3 et 100 secondes, ainsi qu'un courant consommé Ct_act correspondant. Dans le mode transitoire, on détermine une durée d'activation Dur_act pouvant couvrir par exemple un nombre au moins supérieur à trois activations transitoires successives, soit supérieur à 9 secondes (3 multiplié par 3 secondes par activation).

Ces informations (durée d'activation Dur_act et courant correspondant Ct_act) sont non nulles, uniquement lorsque le compresseur électrique 14 n'est pas déjà en fonctionnement et lorsque l'état énergétique du stockeur d'énergie principal 32 du véhicule le permet.

Plus précisément, dans le cas où le compresseur électrique 14 est déjà activé (Et_act=ON) ou lorsque le signal Aut_alim_pr retourné par le module M1 vaut 0 alors le module M2 impose une durée d'activation Dur_act nulle et un courant de consommation Ct_act nul.

Dans le cas où le compresseur électrique 14 est inactif (Et_act=OFF) et lorsqu'une autorisation d'alimentation du stockeur d'énergie auxiliaire 36 est donnée, c'est-à-dire lorsque le signal Aut_alim_pr retourné par le module M1 vaut 1, alors il est possible de distinguer les deux modes d'utilisation du compresseur électrique 14 (continu ou transitoire) pour déterminer la durée d'activation Dur_act et le courant consommé Ct_act correspondant.

Le module M3 détermine, à partir de la durée d'activation Dur_act du compresseur électrique 14 à garantir et du courant consommé Ct_act moyen, la charge du stockeur d'énergie auxiliaire $\Delta$SOC_nec qui sera nécessaire pour assurer l'activation future du compresseur électrique 14.

Plus précisément, le module M3 prédit la charge d'énergie ($\Delta$SOC_nec) que le stockeur d'énergie auxiliaire 36 devra provisionner pour être en mesure d'assurer la fourniture d'énergie électrique, liée à l'activation du compresseur électrique 14. Ainsi, le niveau de charge du stockeur d'énergie auxiliaire ($\Delta$SOC_nec) à garantir pour le compresseur électrique 14 est déterminé à partir de la relation ci-dessous :

$$\Delta SOC\_nec = (Ct\_act \times Dur\_act \times 100) / (3600 \times C\_stoc\_aux)$$

Avec:

- Ct_act étant le courant (A) consommé en moyenne par le compresseur électrique, pendant sa durée d'activation,
- Dur_act étant la durée d'activation du compresseur électrique à garantir,
- C_stoc_aux étant la capacité du stockeur d'énergie auxiliaire (en A.h).

Le module M4 permet de piloter de façon préventive, la recharge du stockeur d'énergie auxiliaire 36, de façon à s'assurer qu'il y aura suffisamment d'énergie dans ce stockeur 36, pour alimenter le compresseur électrique 14, en cas d'incapacité des moyens conventionnels de fourniture d'énergie électrique du véhicule (alternateur 34 et batterie 32 par exemple) à assurer cette tâche.

Le module M4 sollicite une recharge du stockeur d'énergie auxiliaire 36 si nécessaire, dans le cas où son état de charge ne serait pas en mesure de garantir l'alimentation du compresseur électrique 14, pendant sa durée requise d'activation, en plus d'assurer d'autres besoins énergétiques éventuels lui ayant été alloués, comme la préservation de sa propre durabilité ou l'alimentation éventuelle d'autres consommateurs.

A cet effet, le module M4 compare l'état de charge SOC_stoc_aux_act du stockeur d'énergie auxiliaire 36, la charge minimale SOC_stoc_aux_min à respecter au niveau du stockeur d'énergie auxiliaire 36, pour des besoins notamment de durabilité du stockeur 36 et d'alimentation éventuelle d'autres consommateurs électriques, ainsi que la charge nécessaire $\Delta$SOC_nec au bon fonctionnement du compresseur électrique 14. La charge minimale SOC_stoc_aux_min à respecter au niveau du stockeur d'énergie auxiliaire 36 est par exemple comprise entre 40% et 70%.

Dans le cas où la somme du niveau de charge minimale du stockeur d'énergie auxiliaire 36 pour l'activation du compresseur électrique $\Delta$SOC_nec et du niveau de charge minimale du stockeur d'énergie auxiliaire 36 pour des besoins de durabilité du stockeur d'énergie auxiliaire 36 et d'alimentation éventuelle d'autres consommateurs électriques SOC_stoc_aux_min est inférieure au niveau de charge actuel du stockeur d'énergie auxiliaire SOC_stoc_aux_act, soit SOC_stoc_aux_min + $\Delta$SOC_nec $\leq$ SOC_stoc_aux_act, alors aucune recharge du stockeur d'énergie auxiliaire 36 n'est sollicitée.

Dans le cas où la somme du niveau de charge minimale du stockeur d'énergie auxiliaire 36 pour l'activation du compresseur électrique $\Delta$SOC_nec et du niveau de charge minimale du stockeur d'énergie auxiliaire 36 pour des besoins de durabilité du stockeur d'énergie auxiliaire 36 et d'alimentation éventuelle d'autres consommateurs électriques SOC_stoc_aux_min est supérieure au niveau de charge actuel du stockeur d'énergie auxiliaire SOC_stoc_aux_act, soit SOC_stoc_aux_min + $\Delta$SOC_nec $\geq$ SOC_stoc_aux_act, alors une recharge Rech_stoc_aux du stockeur d'énergie auxiliaire 36 est sollicitée.

**Revendications**

1. Procédé de pilotage prédictif d'une recharge d'un stockeur d'énergie auxiliaire (36) pour l'alimentation d'un compresseur électrique (14) de moteur thermique (12), notamment de véhicule automobile, ledit stockeur d'énergie auxiliaire (36) étant associé à un stockeur d'énergie principal (32), **caractérisé en ce que** ledit procédé comporte:

   - une étape de détermination d'une durée d'activation (Dur_act) et d'un courant consommé (Ct_act) par le compresseur électrique (14) lors d'une activation future dudit compresseur électrique (14),
   - une étape de détermination d'un niveau de charge minimal ($\Delta$SOC_nec) du stockeur d'énergie auxiliaire (36) permettant l'activation future du compresseur électrique (14) à partir de la durée d'activation (Dur_act) et du courant consommé (Ct_act) précédemment déterminés, et
   - une étape de pilotage de la recharge du stockeur d'énergie auxiliaire (36) en fonction d'un niveau de charge actuel (SOC_stoc_aux_act) du stockeur d'énergie auxiliaire (36) et du niveau de charge minimal du stockeur d'énergie auxiliaire (36) précédemment déterminé.

2. Procédé selon la revendication 1, **caractérisé en ce qu'**il comporte l'étape d'autoriser ou d'inhiber la recharge du stockeur d'énergie auxiliaire (36) en fonction d'un niveau de charge du stockeur d'énergie principal (32).

3. Procédé selon la revendication 2, **caractérisé en ce que** la durée d'activation (Dur_act) et le courant consommé (Ct_act) par le compresseur électrique (14) dépendent d'un mode de fonctionnement (M) du compresseur électrique (14), d'un état d'activation (Et_act) du compresseur électrique (14), et de l'autorisation ou non de la recharge du stockeur d'énergie auxiliaire (36).

4. Procédé selon la revendication 3, **caractérisé en ce que** le mode de fonctionnement (M) du compresseur électrique (14) est choisi parmi un mode continu ou un mode transitoire.

5. Procédé selon l'une quelconque des revendications 1 à 4, **caractérisé en ce que** le niveau de charge minimal du stockeur d'énergie auxiliaire (36) permettant l'activation future du compresseur électrique (14) est déterminé à partir de la durée d'activation (Dur_act), du courant consommé (Ct_act), et d'une capacité du stockeur d'énergie auxiliaire (36).

6. Procédé selon l'une quelconque des revendications 1 à 5, **caractérisé en ce qu'**une recharge du stockeur d'énergie auxiliaire (36) est sollicitée, dans le cas où la somme du niveau de charge minimal ($\Delta$SOC_nec) du stockeur d'énergie auxiliaire (36) pour l'activation du compresseur électrique (14) et un niveau de charge minimal (SOC_stoc_aux_min) du stockeur d'énergie auxiliaire (36) pour des besoins de durabilité dudit stockeur d'énergie auxiliaire (36) et d'alimentation éventuelle d'autres consommateurs électriques est supérieure au niveau de charge actuel (SOC_stoc_aux_act) du stockeur d'énergie auxiliaire (36).

7. Procédé selon la revendication 6, **caractérisé en ce que** le niveau de charge minimal (SOC_stoc_aux_min) du stockeur d'énergie auxiliaire (36) pour des besoins de durabilité dudit stockeur d'énergie auxiliaire (36) et d'alimentation éventuelle d'autres consommateurs électriques est compris entre 40% et 70% du niveau de charge maximal du stockeur d'énergie auxiliaire (36).

8. Procédé selon l'une quelconque des revendications 1 à 7, **caractérisé en ce que** le stockeur d'énergie auxiliaire (36) est une batterie, notamment de type Lithium-ion, ou un dispositif capacitif de maintien de tension de réseau de bord.

9. Calculateur moteur (31) comportant une mémoire stockant des instructions logicielles pour la mise en oeuvre du procédé de pilotage prédictif d'une recharge d'un stockeur d'énergie auxiliaire (36) pour l'alimentation d'un compresseur électrique (14) de moteur thermique (12) tel que défini selon l'une quelconque des revendications 1 à 8.

**Fig. 1**

**Fig. 2**

Europäisches
Patentamt

European
Patent Office

Office européen
des brevets

**RAPPORT DE RECHERCHE EUROPEENNE**

Numéro de la demande

EP 19 15 6810

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | FR 2 856 109 A1 (DENSO CORP [JP]) 17 décembre 2004 (2004-12-17)<br>* figures 1,12 *<br>* le document en entier * | 1-3,5-8<br>4 | INV.<br>H02J7/00<br>B60R16/03<br>F02B37/10<br>F02B39/10<br>H02J7/14<br>H02J7/34<br>F02B37/04<br>B60L58/13 |
| A | FR 2 992 348 A3 (RENAULT SA [FR]) 27 décembre 2013 (2013-12-27)<br>* figure 2 *<br>* page 18, ligne 1 - ligne 30 * | 1-9 | |
| A | US 2017/225635 A1 (OBAYASHI KAZUYOSHI [JP] ET AL) 10 août 2017 (2017-08-10)<br>* figure 1 *<br>* alinéa [0074] - alinéa [0075] * | 1-9 | |
| A | US 2017/058795 A1 (SCHMITT FLORIAN [DE] ET AL) 2 mars 2017 (2017-03-02)<br>* figure 1 *<br>* alinéa [0060] * | 1-9 | |
| A | US 2016/169129 A1 (LEWIS ALLAN [CA] ET AL) 16 juin 2016 (2016-06-16)<br>* figure 1 *<br>* alinéa [0031] * | 1-9 | DOMAINES TECHNIQUES RECHERCHES (IPC)<br>H02J<br>B60L<br>B60R<br>F02B |

Le présent rapport a été établi pour toutes les revendications

| Lieu de la recherche | Date d'achèvement de la recherche | Examinateur |
|---|---|---|
| Munich | 29 mars 2019 | Martin, Raynald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

7

**ANNEXE AU RAPPORT DE RECHERCHE EUROPEENNE
RELATIF A LA DEMANDE DE BREVET EUROPEEN NO.**

EP 19 15 6810

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2019

| Document brevet cité au rapport de recherche | | Date de publication | Membre(s) de la famille de brevet(s) | | Date de publication |
|---|---|---|---|---|---|
| FR 2856109 | A1 | 17-12-2004 | DE 102004028713 | A1 | 10-02-2005 |
| | | | FR     2856109 | A1 | 17-12-2004 |
| | | | JP     4224781 | B2 | 18-02-2009 |
| | | | JP   2005009320 | A | 13-01-2005 |
| FR 2992348 | A3 | 27-12-2013 | AUCUN | | |
| US 2017225635 | A1 | 10-08-2017 | AUCUN | | |
| US 2017058795 | A1 | 02-03-2017 | CN     106481447 | A | 08-03-2017 |
| | | | DE 102015216377 | A1 | 02-03-2017 |
| | | | JP   2017082761 | A | 18-05-2017 |
| | | | US   2017058795 | A1 | 02-03-2017 |
| US 2016169129 | A1 | 16-06-2016 | CN     105984402 | A | 05-10-2016 |
| | | | KR   20160072066 | A | 22-06-2016 |
| | | | US   2016169129 | A1 | 16-06-2016 |

EPO FORM P0460

Pour tout renseignement concernant cette annexe : voir Journal Officiel de l'Office européen des brevets, No.12/82